# EUROPEAN PATENT APPLICATION

(11) **EP 0 642 734 A1**
(43) Date of publication of application: **15.03.1995**
(21) Application number: 94600006.4
(22) Date of filing: 09.09.1994
(51) Int. Cl.: A01K 47/06

(54) **Bees collector**

(30) Priority: 13.09.1993 GR 93010373
(71) Applicant: Petridis, Petros, GR-65302 Kavala (GR)
(72) Inventor: Petridis, Petros, GR-65302 Kavala (GR)

(57) **Abstract**

With the present invention we succeed to the collection and transportation of the bees during 24 hours.
The bees collector is consisted of the axe (1) with the small screws with the help of the springs (2) and the centralised parties (4) goes and comes in the inside parts (comb) of the main body. The side pieces are adjusted to the body and to the beeshive completing the possible space of every beeshive, and the secure airing of it.

The cover (8) helps to the stabilising of the screws of the axe.

The square tubes (6) with the crosses, operate as valves of one direction, not allowing the exit of the bees.

For bigger security in the transportation we use the tubs (taps) that close in the external part the tubes.

## Description

The invention refers to an instrument of collection and transportation of bees. With this instrument the collection and the transportation of bees is obtained any moment during 24 hours.

The invention is original and does not exist all over the world any other instrument of collection and transportation of bees during the day.

Up today the transportation of bees is done only during the night. With the present instrument the transportation during the day is obtained offering bigger facility to the bees producers during the transportation of the beehive. During the transportation of the beehive the airing of the bees is complete through the opening of the instrument that remains open so that the air in beehive is recycled and so we have the secure transportation of the bees without losses.

More analytically we see at (pic.1) the bees collector and at (pic.2) the analytical pieces.

The axe (1) is consisted of a metal stick, bears pending pieces (screws) and at the edges one attraction spring (2). With the help of the spring and another two pieces (centralised) (4) we make the up and down of the axe(1) in openings that have the shape of comb (b) for the stable movement of the pending pieces that bears the axe (1), that is used for entrance and exit of the bees.

There are two springs on the right and the left (2). The upper parts enter at the edges of the axe(1). The lower parts are staale entering in two screws (each spring). They are used for the stabilisation of the central axe (1).
Two oblong cylinder bases (3) for the help of the covers support each one bearing a screw.
Two centralised parts (4) which are used for the up and down of the axe (1). Its use is done with oblong screw which enters through (4) at the lower part of the piece, and has the ability with a special key alen to allow the operation up and down. At the lower part of the main body there are incorporation tubes (5) that are used for the entrance of the bees.
There are square tubes (6) which enter in the tubes (5) and on the other hand there are moving crosses (one for every tube), supported freely at the upper part of each tube (16).

These crosses allow the entrance of the bees and do not allow the exit because they are moving only to side of the entrance.

The piece (7) is a double cover (tap) which is used to close the tubes (5) because during the transportation for any reason the pending crosse may ope and we may have some loss.

In the cover (8) there are holes for the penetration of a screw for its good stabilisation and its coordination with the main body.
In the internal part of the cover (8) there is a oblong expansion which goes touch up to the middle of the comb (b) for the stabilisation of the screws of the axe (1). There are two pieces (9), right and left which complete the difference of width of every beehive.

These pieces enter to the main body and have the ability to open and close so that the difference in width of every beehive is hired. At the front part they have square holes for the best airing of the beehive.

At the back part to the inside of the beehive they have a prolongation and each one has one hole, for the stabilisation and the secure of all the instrument screwing at the beehive's walls.

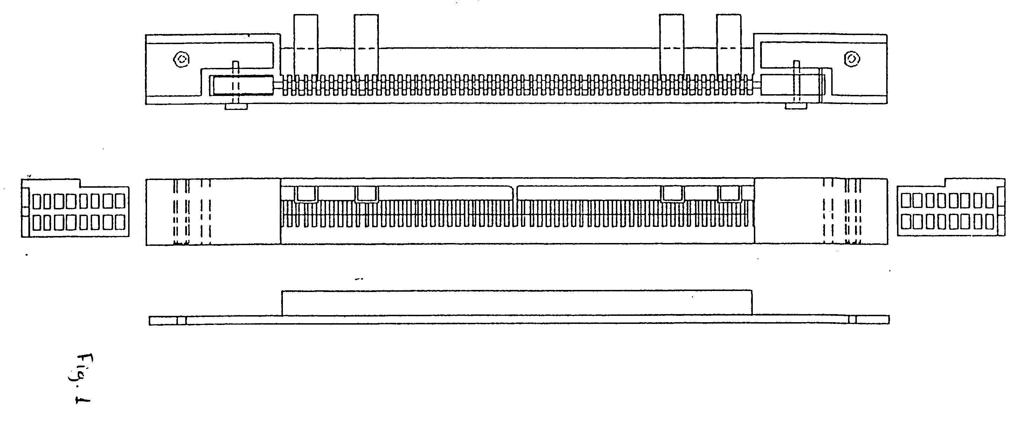

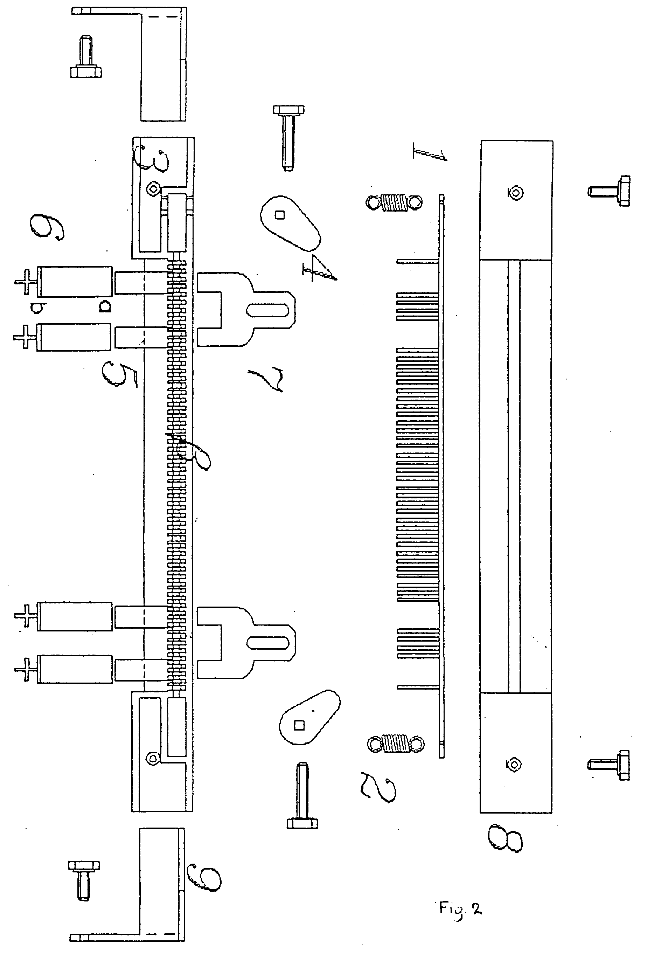

## Claims

1. The Bees Collector is consisted from the central axe (1) which bears screws, by springs (2), by oblong basis (3), by centralised parts (4), by square tubes (5), by square tubes (6) with the pending crosses, by a special part (7), from the cover (8) and by the side pieces (9).

2. The Bees Collector according to the claim Number 1, is characterised by the fact that the springs (2) and the centralised parts (40 help the up and down of the central axe (1) for the collection or not of the bees.

3. The Bees Collection according to the claim Number 1 is characterised by the fact that the cover (8) is stabilised with the help of oblong bases (3).

4. The Bees Collector according to the claim number 1 is characterised by the fact that the tubes (5) and the square tubes (6) bearing a special cross prohibit the exit of the bess and allow only the entrance of the bees to the beehive.

5. The bees collector according to the claim 1 is characterised by the fact that it bears tubs (7) for the external closing of the square tubes (5) and (6).

6. The bees Collector according to claim number 1 is characterised by the special moving side pieces (9) which are adjusted at the entrance of beehive no matter of the size of the beehive securing though the safe air of it.
